# EUROPÄISCHE PATENTSCHRIFT

(11) **EP 3 761 832 B1**
(45) Veröffentlichungstag und Bekanntmachung des Hinweises auf die Patenterteilung: **23.08.2023**
(21) Anmeldenummer: 19714384.5
(22) Anmeldetag: 26.03.2019
(51) Int. Cl.: A47B 96/20, B32B 15/04, B29C 63/04, B32B 3/04

(54) **VERFAHREN ZUR HERSTELLUNG EINER ABDECKUNG FÜR EINE MÖBELPLATTE**
METHOD FOR PRODUCING A COVER FOR A FURNITURE PANEL
PROCÉDÉ DE FABRICATION D'UN COUVERCLE POUR UN PLATEAU DE MEUBLE

(30) Priorität: 28.03.2018 DE 102018107440
(43) Veröffentlichungstag der Anmeldung: 13.01.2021
(73) Patentinhaber: Bulthaup GmbH & Co. KG, 84155 Bodenkirchen (DE)
(72) Erfinder: ECKERT, Marc Oliver, 84155 Bodenkirchen (DE); RINGWALD, Andreas, 84028 Landshut (DE); LIMMER, Gerhard, 84160 Frontenhausen (DE)
(74) Vertreter: Herrmann, Uwe
(86) Internationale Anmeldenummer: PCT/EP2019/057615
(87) Internationale Veröffentlichungsnummer: WO 2019/185644

(56) Entgegenhaltungen:
- DE-A1- 19 840 957
- DE-U1- 9 211 033
- GB-A- 1 595 032

## Beschreibung

Die vorliegende Erfindung betrifft ein Verfahren zur Herstellung einer Abdeckung für eine Möbelplatte.

Aus dem Stand der Technik ist es bekannt, beispielsweise eine Möbelfront z.B. eines Auszugs mit einer Abdeckung, wie z.B. einem Dekor mit einer Dekorschicht zu versehen. Dabei kann beispielsweise eine Trägerplatte aus einem Holzwerkstoff mit einer Kunststoffbeschichtung versehen werden, die der Möbelfront das endgültige optische Erscheinungsbild verleiht. Ein derartiges Verfahren ist beispielsweise durch GB 1 595 032 A oder GB 1 406 886 A bekannt.

Ein Nachteil bei derartigen Möbelfronten besteht darin, dass das Dekor nicht oder nur mit großem Aufwand veränderbar ist und im Übrigen bei der Montage größte Vorsicht geboten ist, damit das Dekor nicht beschädigt wird.

Der vorliegenden Erfindung liegt die Aufgabe zugrunde, ein Verfahren bereitzustellen, dass das optische Erscheinungsbild der Möbelplatte leicht veränderbar ist und zudem das Risiko ausgeschlossen werden kann, dass es zu einer Beschädigung der Abdeckung während der Montagearbeiten kommt.

Diese Aufgabe wird durch ein Verfahren mit den Merkmalen des Anspruchs 1 gelöst.

Das Trägermaterial kann beispielsweise aus Metall bestehen und aus einer Platine geschnitten, vorzugsweise gelasert werden.

Auch andere Werkstoffe, wie z.B. Holz kommen für das Trägermaterial in Betracht.

Das Entfernen der Eckbereiche des Bezugs kann beispielsweise durch Stanzen erfolgen.

Eine Seite des Trägermaterials kann vollflächig kaschiert werden, wobei ein Überstand des Bezugs verbleibt, der gemäß Schritt c) drapiert wird.

Denkbar ist es, dass das Trägermaterial eine viereckige Form aufweist.

An dieser Stelle wird darauf hingewiesen, dass der Begriff "Platte" nicht einschränkend dahingehend auszulegen ist, dass es sich um ein flaches, ebenes Bauteil handeln muss. Auch gekrümmte, beliebige geformte und beliebige starke Materialien bzw. Möbelplatten sind von der Erfindung und von dem Begriff "Platte" umfasst.

Weiterhin kann vorgesehen sein, dass das Abkanten in Schritt d) rechtwinklig erfolgt, so dass ein kastenförmiges Bauteil entsteht, dessen eine Seite offen ist.

Eine einfache und haltbare Befestigungsmöglichkeit ergibt sich, wenn der Bezug mit dem Trägermaterial zumindest bereichsweise oder vollflächig verklebt wird.

Der Bezug kann teilweise oder vollständig Leder undloder einen Textilwerkstoff undloder Kunststoff undloder eine Folie und/oder Papier aufweisen oder aus diesen bestehen.

Vorzugsweise erfolgt die Herstellung des Bezugs nahtfrei.

In einem weiteren Verfahrensschritt wird die Abdeckung nach ihrer Herstellung auf einen Träger aufgesteckt.

Die vorliegende Erfindung betrifft des Weiteren die Verwendung einer durch das Verfahren des Anspruchs 10 hergestellten Möbelplatte, insbesondere als Möbelfront oder -tür.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Es zeigen:
- Figur 1:: eine schematische Ansicht der Arbeitsschritte bei der Herstellung der Abdeckung,
- Figur 2:: eine perspektivische Ansicht des Eckbereichs einer Trägerplatte,
- Figur 3:: perspektivische Ansichten des Eckbereiches einer Trägerplatte mit Durchbrechungen ohne Scharnier, mit Scharnier und mit Abdeckung vor deren Aufstecken und
- Figur 4:: perspektivische Ansichten des Eckbereichs einer Abdeckung und einer Möbelplatte mit unterschiedlichen Materialien der Abdeckung.

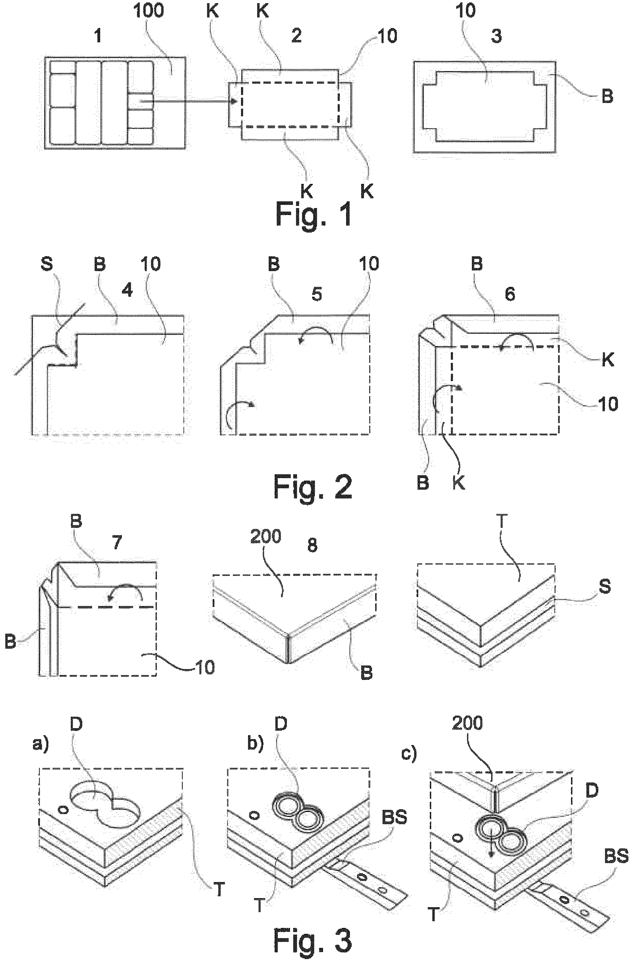

Figur 1 zeigt in Schritt 1 eine Blechplatine 100, aus der einzelne Blechzuschnitte 10 z.B. durch Lasern herausgeschnitten werden.

Die Schritte sind jeweils oberhalb der Abbildungen durch Zahlen gekennzeichnet.

Ein solcher Blechzuschnitt 10 ist in Schritt 2 gezeigt. Er weist eine viereckige Form auf (gestrichelte Linien), an deren Seiten jeweils ein Kantenbereich K übersteht. Der Blechzuschnitt 10 bildet die Trägerplatte 10.

In Schritt 3 wird das Trägermaterial 10 auf einer Seite vollflächig mit Textil oder Leder oder einem sonstigen Bezug B kaschiert.

Sodann wird in Schritt 4 in den Eckbereichen des Bezugs eine Stanze 5 positioniert und eine Ecke des Bezugs wird ausgestanzt, wie dies in Schritt 5 ersichtlich ist.

Anschließend werden die überstehenden Kanten des Bezugs B über das Trägermaterial 10 drapiert, wie dies aus Schritt 5 (s. Pfeile) hervorgeht und die Kanten K des Trägermaterials 10 werden nacheinander (1, 2 ...) oder gleichzeitig abgekantet, wie dies in Schritt 6 gezeigt ist. Vorzugsweise stehen diese Kanten K anschließend senkrecht zur Grundfläche des Trägermaterials, d.h. senkrecht zur Papierebene.

Beim Abkanten wird der Bezug an den Ecken nach Innen (s. Pfeil), d.h. zu dem Trägermaterial hin drapiert (Schritt 7). Die in den Schritten 1 bis 7 unten liegende Außenseite der Abdeckung ist nun vollständig mit dem Bezug versehen.

Stürzt man die Abdeckung ausgehend von der Position gemäß Schritt 7, erhält man die Abdeckung 200 gemäß Schritt 8, d.h. ein kastenförmigen Körper mit einer offenen Seite, die in Schritt 8 unten angeordnet ist.

Figur 2 zeigt die Trägerplatte T mit einer Fase bzw. mit einem stufenförmigen Vorsprung S.

Figur 3 zeigt die Durchbrechungen D der Trägerplatte T ohne Beschläge (a), mit darin aufgenommenen Schamierhalterungen (b), an denen sich das Scharnier BS befindet und kurz vor dem Aufstecken der Abdeckung 200, wie dies aus Figur 3 c) hervorgeht.

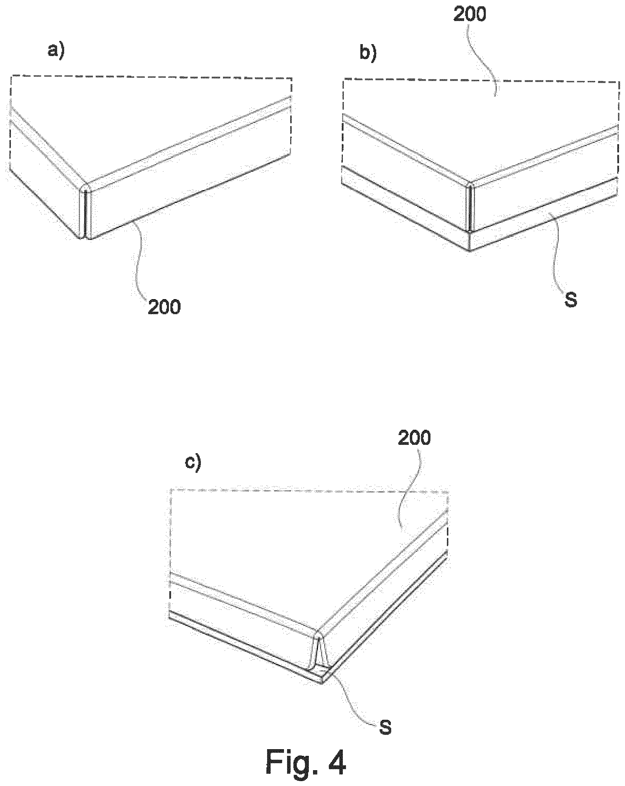

Aus Figur 4 a) geht eine Abdeckung 200 mit Textil-Außenseite ohne Trägerplatte hervor. Figur 4 b) zeigt die Abdeckung 200 im auf die Trägerplatte T aufgesteckten Zustand, wobei die Abdeckung auf Ihrer sichtbaren Außenseite Textil aufweist.

Figur 4 c) zeigt die Anordnung gemäß Figur 4 b) mit einer Abdeckung, deren Außenseite aus Naturleder besteht.

In einer bevorzugten Ausgestaltung weist die vorliegende Erfindung einen oder mehrere folgende Vorteile auf:
1. Einseitige Leder-/Textilkaschierung möglich ohne Verzug der Bauteile durch schwimmende Lagerung der Abdeckung auf der Trägerplatte,
2. Industrieller Verklebeprozess der Vorderseiten möglich,
3. Textile Naht-Optik ohne Nähte,
4. Baukastensystem: Freie Kombination der Materialien aus Träger und Abdeckung, d.h. Cover,
5. Varianz wird erst ganz am Ende des Herstellungsprozesses erzeugt,
6. 2-schallger Aufbau, dadurch optische "Leichtigkeit",
7. nachträglicher Austausch der Abdeckungen möglich,
8. gesamte Technik (Scharniere, Touch-Beschlag, Puffer etc.) erfolgt auf der Rückseite, d.h. auf der vor der Abdeckung abgewandten Seite der Trägerplatte in bekanntes Material,
9. Abdeckung wird erst ganz am Ende des Herstellungsprozesses aufgebracht, dadurch wird die Gefahr von Beschädigungen / Verschmutzungen reduziert,
10. Eigenfertigung und Fremdbezug der Abdeckungen denkbar,
11. keine offenen Kanten am Bezug, z.B. am Leder oder Textil,
12. Träger kann komplett versiegelt werden, somit auch ein Schutz gegen Feuchtigkeit erreicht werden,
13. unterschiedlichste Materialien sind verarbeitbar, wie z.B. Leder, Textil, Papier, Folien etc.

## Patentansprüche

1. Verfahren zur Herstellung einer Abdeckung für eine Möbelplatte, insbesondere für eine Möbelfront, **dadurch gekennzeichnet, dass** das Verfahren die folgenden Schritte umfasst:
a) Kaschieren eines Trägermaterials mit einem Bezug, wobei das Trägermaterial eine mehreckige Form aufweist und überstehende Kanten umfasst,
b) Entfernen der Eckbereiche des Bezugs,
c) Drapieren der überstehenden Kanten des Bezugs über das Trägermaterial,
d) Abkanten der überstehenden Kanten des Trägermaterials
e) Drapieren der Ecken des Bezugs nach Innen, d.h. zu dem Trägermaterial hin, wobei Schritt e) zeitgleich mit Schritt d) erfolgt.

2. Verfahren nach Anspruch 1, **dadurch gekennzeichnet, dass** das Trägermaterial aus Metall besteht und aus einer Platine geschnitten, vorzugsweise gelasert wird.

3. Verfahren nach Anspruch 1 oder 2, **dadurch gekennzeichnet, dass** das Entfernen der Eckbereiche des Bezugs durch Stanzen erfolgt.

4. Verfahren nach einem der vorhergehenden Ansprüche, **dadurch gekennzeichnet, dass** eine Seite des Trägermaterials vollflächig kaschiert wird und dabei ein Überstand des Bezugs verbleibt, der gemäß Schritt c) drapiert wird.

5. Verfahren nach einem der vorhergehenden Ansprüche, **dadurch gekennzeichnet, dass** das Trägermaterial viereckige Form aufweist.

6. Verfahren nach einem der vorhergehenden Ansprüche, **dadurch gekennzeichnet, dass** das Abkanten in Schritt d) rechtwinklig erfolgt, so dass ein kastenförmiges Bauteil entsteht, dessen eine Seite offen ist.

7. Verfahren nach einem der vorhergehenden Ansprüche, **dadurch gekennzeichnet, dass** der Bezug mit dem Trägermaterial zumindest bereichsweise verklebt wird.

8. Verfahren nach einem der vorhergehenden Ansprüche, **dadurch gekennzeichnet, dass** der Bezug teilweise oder vollständig Leder und/oder einen Textilwerkstoff und/oder Kunststoff und/oder eine Folie und/oder Papier aufweist oder aus diesen besteht.

9. Verfahren nach einem der vorhergehenden Ansprüche, **dadurch gekennzeichnet, dass** der Bezug ohne Nähte hergestellt wird.

10. Verfahren zur Herstellung einer Möbelplatte, **dadurch gekennzeichnet, dass** eine Abdeckung nach ihrer Herstellung nach einem der vorgehenden Ansprüche auf einen Träger aufgesteckt wird und dort durch Kraft- und/oder Formschluss fixiert wird.

11. Verwendung einer durch das Verfahren des Anspruchs 10 hergestellten Möbelplatte, insbesondere als Möbelfront oder -tür.

## Claims

1. Method for producing a cover for a furniture panel, in particular for a furniture front, **characterized in that** the method comprises the following steps:
a) laminating a carrier material with a covering, wherein the carrier material has a polygonal shape and comprises protruding edges,
b) removing the corner regions of the covering,
c) draping the protruding edges of the covering over the carrier material,
d) bending the protruding edges of the carrier material,
e) draping the edges of the covering inwards, i.e. towards the carrier material, wherein step e) takes place at the same time as step d).

2. Method according to claim 1, **characterized in that** the carrier material consists of metal and is cut, preferably lasered, from a panel.

3. Method according to claim 1 or 2, **characterized in that** the corner regions of the covering are removed by punching.

4. Method according to any of the preceding claims, **characterized in that** one side of the carrier material is laminated over its entire surface and, in the process, a protrusion of the covering remains, which is draped according to step c).

5. Method according to any of the preceding claims, **characterized in that** the carrier material has a quadrilateral shape.

6. Method according to any of the preceding claims, **characterized in that** the edge bending in step d) is at right angles, such that a box-shaped component is produced of which one side is open.

7. Method according to any of the preceding claims, **characterized in that** the covering is bonded to the carrier material at least in regions.

8. Method according to any of the preceding claims, **characterized in that** the covering comprises or consists of leather and/or a textile material and/or plastics material and/or a film and/or paper, in part or completely.

9. Method according to any of the preceding claims, **characterized in that** the covering is produced without seams.

10. Method for producing a furniture panel, **characterized in that** the cover is fitted onto a carrier after being produced according to any of the preceding claims and is fixed thereto by a force fit and/or form fit.

11. Use of a furniture panel produced by the method according to claim 10, in particular as a furniture front or door.

## Revendications

1. Procédé de fabrication d'un couvercle pour un plateau de meuble, en particulier pour une façade de meuble, **caractérisé en ce que** le procédé comprend les étapes suivantes :
a) le doublage d'un matériau de support avec un revêtement, dans lequel le matériau de support présente une forme polygonale et comprend des bords en saillie,
b) le retrait des zones de coin du revêtement,
c) le drapage des bords en saillie du revêtement par-dessus le matériau de support,
d) le pliage des bords en saillie du matériau de support,
e) le drapage des coins du revêtement vers l'intérieur, en d'autres termes en direction du matériau de support, dans lequel l'étape e) est effectuée en même temps que l'étape d).

2. Procédé selon la revendication 1, **caractérisé en ce que** le matériau de support est constitué de métal et est découpé d'une platine, de préférence est exposé à un laser.

3. Procédé selon la revendication 1 ou 2, **caractérisé en ce que** le retrait des zones de coin du revêtement est effectué par estampage.

4. Procédé selon l'une quelconque des revendications précédentes, **caractérisé en ce qu'**un côté du matériau de support est doublé sur la totalité de la surface et il reste ce faisant un débord du revêtement, qui est drapé selon l'étape c).

5. Procédé selon l'une quelconque des revendications précédentes, **caractérisé en ce que** le matériau de support présente une forme de quadrilatère.

6. Procédé selon l'une quelconque des revendications précédentes, **caractérisé en ce que** le pliage est effectué à l'étape d) à angle droit de sorte que se forme un composant en forme de boîte, dont un côté est ouvert.

7. Procédé selon l'une quelconque des revendications précédentes, **caractérisé en ce que** le revêtement est collé au moins par endroits au matériau de support.

8. Procédé selon l'une quelconque des revendications précédentes, **caractérisé en ce que** le revêtement présente en partie ou en totalité du cuir et/ou un matériau textile et/ou de la matière plastique et/ou un film et/ou du papier ou est constitué de ceux-ci.

9. Procédé selon l'une quelconque des revendications précédentes, **caractérisé en ce que** le revêtement est fabriqué sans coutures.

10. Procédé destiné à fabriquer un plateau de meuble, **caractérisé en ce qu'**un couvercle est installé par enfichage sur un support après sa fabrication selon l'une quelconque des revendications précédentes et y est fixé à force et/ou par complémentarité de forme.

11. Utilisation d'un plateau de meuble fabriqué par le procédé de la revendication 10, en particulier en tant que façade ou porte de meuble.
